# FASCICULE DE BREVET EUROPEEN

(11) **EP 0 803 565 B1**
(45) Date de publication et mention de la délivrance du brevet: **21.08.2002**
(21) Numéro de dépôt: 97400872.4
(22) Date de dépôt: 18.04.1997
(51) Int. Cl.: C10M 159/24, C10M 159/20, C07F 9/165

(54) **Nouveaux produits colloidaux, leur préparation et leurs utilisations**
Neue kolloidale Produkte, ihre Herstellung und ihre Verwendung
New colloidal products, their preparation and their uses

(30) Priorité: 25.04.1996 FR 9605403
(43) Date de publication de la demande: 29.10.1997
(73) Titulaire: INSTITUT FRANCAIS DU PETROLE, 92852 Rueil-Malmaison Cedex (FR)
(72) Inventeur: Delfort, Bruno, 75005 Paris (FR); Lacome, Thierry, 92500 Rueil Malmaison (FR); Born, Maurice, 92000 Nanterre (FR)

(56) Documents cités:
- EP-A- 0 438 942
- DE-A- 1 444 807
- FR-A- 2 101 813
- FR-A- 2 616 441
- US-A- 2 786 029
- US-A- 2 879 283
- US-A- 4 541 940
- US-A- 4 824 584

## Description

L'invention concerne de nouveaux produits colloïdaux surbasiques, leur préparation et leurs utilisations.

Elle concerne plus particulièrement des produits colloïdaux surbasiques présentant des propriétés de détergence, qui peuvent être utilisés notamment comme additifs antiusure et extrême-pression dans les huiles lubrifiantes, minérales ou synthétiques, par exemple dans les lubrifiants moteurs, les huiles pour engrenages, les fluides hydrauliques ou encore les huiles pour le travail des métaux.

Les additifs détergents surbasiques sont connus depuis longtemps. Certains d'entre eux et leur préparation ont été décrits par exemple dans les brevets des Etats-Unis US-A-2 865 956, 3 150 088, 3 537 996, 3 830 739, 3 865 737, 3 953 519, 3 966 621, 4 148 740 et 4 505 830, et dans le brevet français FR-B-2 101 813. Ces additifs détergents sont en général obtenus par carbonatation, par exemple par l'anhydride carbonique, d'un hydroxyde de métal alcalin ou alcalino-terreux, le carbonate formé étant maintenu en suspension colloïdale dans le milieu hydrocarboné au moyen d'un composé tensioactif, qui est en général choisi parmi les acides sulfoniques oléosolubles et leurs sels.

On a maintenant découvert de nouveaux produits colloïdaux surbasiques appartenant à la classe mentionnée ci-dessus, mais dans lesquels les acides sulfoniques sont des composés particuliers contenant du soufre et du phosphore, à savoir des acides dihydrocarbyl-dithiophosphoryl-alcane-sulfoniques ou de leurs sels, dont la mise en jeu confère aux produits colloïdaux finaux des propriétés améliorées.

Le document de brevet US-A-2 879 283 décrit notamment des acides sulfoalkylphosphorothioïques et leurs sels de formule 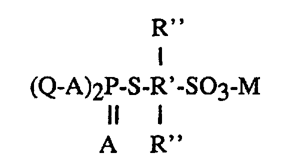 où
A peut être un atome d'oxygène ou un atome de soufre ;
Q peut être un radical alkyle de 1 à 12 atomes de carbone ;
R' est un radical hydrocarboné divalent ;
les R" peuvent être des atomes d'hydrogène ou des radicaux alkyles de 1 à 12 atomes de carbone ;
et M est un métal alcalin.

Ces composés peuvent être préparés par réaction entre un composé acide phosphorothioïque, qui peut être un ester-acide ou un sel d'acide phosphorothiolique ou phosphorothiolothionique. Les fonctions mercaptans -SH peuvent être salifiées au préalable ou in situ par réaction avec des bases telles que des hydroxydes ou des carbonates alcalins ou alcalino-terreux. Les sels neutres formés réagissent avec la sultone pour donner à nouveau des sels neutres qui sont les produits finaux.

Dans le document de brevet EP-A-0 438 942, on incorpore un dérivé non métallique du phosphore dans les micelles de détergents surbasés formées de façon classique par carbonatation d'un oxyde, hydroxyde ou alcoolate de métal alcalin ou alcalino-terreux au sein d'un tensioactif de type sulfonate, naphténate, salicylate, phosphonate ou thiophosphonate alcalin ou alcalino-terreux. Le dérivé non-métallique du phosphore est en général un dérivé d'acide dihydrocarbyldithiophosphorique, qui présente un certain caractère tensioactif.

Les produits colloïdaux surbasiques de l'invention peuvent être définis, d'une manière générale, comme comprenant, maintenu sous forme micellisée au sein d'un milieu hydrocarboné huileux un coeur de carbonate de métal alcalin ou alcalino-terreux entouré d'une couronne d'au moins un composé tensioactif choisi parmi les acides dihydrocarbyl-dithiophosphoryl-alcane-sulfoniques répondant à la formule générale : 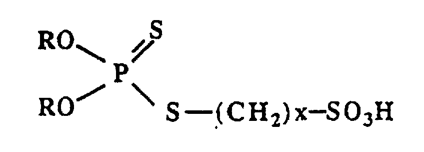 dans laquelle R représenté un radical hydrocarboné monovalent de 1 à 30 atomes de carbone, qui peut être aliphatique, cycloaliphatique ou aromatique et x a une valeur de 3 à 6, de préférence de 3 ou de 4, et les sels de métaux alcalins ou alcalino-terreux de ces acides.

Comme exemples de tels acides dihydrocarbyl-dithiophosphoryl-alcane-sulfoniques utilisables pour préparer les produits colloidaux de l'invention, on peut citer plus particulièrement ceux dans lesquels le nombre x est 3 : ce sont les acides dihydrocarbyl-dithiophosphoryl-3-propane-sulfoniques ; et ceux dans lesquels le nombre x est égal à 4 : ce sont les acides dihydrocarbyl-dithiophosphoryl-4-butane-sulfoniques. Par ailleurs, on peut citer les différents acides dihydrocarbyldithiophosphoryl-alcane-sulfoniques qu'il est possible d'obtenir en faisant varier le radical R. Ainsi, parmi les différents radicaux R, on peut citer plus particulièrement le dodécyle, le didodécyle, etc..On considère également les sels de métaux alcalins ou alcalino-terreux des acides dihydrocarbyl-dithiophosphoryl-alcane-sulfoniques définis ci-dessus.

La préparation des produits colloïdaux surbasiques de l'invention peut être effectuée par exemple par la méthode décrite ci-après.

Dans une première étape (a), on introduit dans un milieu hydrocarboné huileux, par exemple dans une huile lubrifiante minérale ou synthétique, l'acide ou le sel d'acide dihydrocarbyl-dithiophosphoryl-alcane-sulfonique approprié, à une concentration pouvant aller par exemple de 5 à 100 % en masse par rapport au dit milieu, ainsi qu'un oxyde ou un hydroxyde de métal alcalin ou alcalino-terreux, utilisé par exemple en une proportion de 20 à 200 % en masse par rapport au dit acide dihydrocarbyldithiophosphoryl-alcane-sulfonique ou au dit sel. On introduit également dans le milieu au moins un solvant hydrocarboné aliphatique, cycloaliphatique ou aromatique, tel que le toluène, par exemple dans des proportions permettant d'opérer à un concentration en réactifs de 2 à 70 % en masse dans le milieu réactionnel, et, à titre de promoteur, au moins un liquide organique oxygéné tel qu'un alcool, par exemple le méthanol, par exemple à raison de 5 à 40 % en volume par rapport au dit solvant hydrocarboné.

Dans une deuxième étape (b), on effectue la carbonatation de l'oxyde ou de l'hydroxyde alcalin ou alcalino-terreux, en introduisant dans le milieu, maintenu sous agitation, de l'anhydride carbonique CO₂, à raison de 2 à 100 % en mole par rapport au dit oxyde ou hydroxyde alcalin ou alcalino-terreux. Cette introduction peut se faire par exemple à température ambiante ; elle peut durer par exemple de 5 minutes à 3 heures. Pendant la durée de l'introduction de l'anhydride carbonique, on préfère maintenir la température à une valeur inférieure à environ 45 °C.

Après la fin de la réaction, dans une troisième étape (c), on filtre le milieu pour en éliminer les éventuelles particules solides d'oxyde ou d'hydroxyde qui n'auraient pas réagi lors de la carbonatation et on sépare du milieu réactionnel, par exemple par décantation, le liquide organique oxygéné (par exemple l'alcool) utilisé comme promoteur. Après évaporation du solvant hydrocarboné aliphatique, cycloaliphatique ou aromatique (par exemple le toluène), on obtient le produit colloïdal recherché sous la forme d'une suspension limpide dans le milieu hydrocarboné huileux de départ.

Dans l'étape (a), on peut utiliser comme oxyde ou hydroxyde de métal alcalin ou alcalino-terreux ceux de sodium, de potassium, de magnésium, de calcium ou de baryum.

Les produits de l'invention, par exemple tels qu'obtenus par la méthode décrite ci-dessus, se présentent sous la forme de suspensions colloïdales stables dans le milieu hydrocarboné huileux dans lequel ils ont été formés ; ils renferment des proportions de métal alcalin ou alcalino-terreux qui peuvent aller par exemple de 3 à 30 % en masse et présentent un taux de basicité (ou réserve alcaline), représenté par un indice de base (en anglais "Base Number", en abrégé BN) pouvant aller par exemple de 50 à 550 mg de potasse par gramme de produit, huile de dilution exclue. Ils ont en général une teneur en soufre de 2 à 10 % en masse et une teneur en phosphore de 0,3 à 7 % en masse. Ils ont une très bonne solubilité dans les huiles lubrifiantes, minérales ou synthétiques.

Les produits colloïdaux surbasiques à action détergente selon l'invention peuvent être utilisés comme additifs dans les huiles lubrifiantes, minérales ou synthétiques, par exemple dans les lubrifiants moteurs, les huiles pour engrenages, les fluides hydrauliques ou encore les huiles pour le travail des métaux. Ils sont en général incorporés aux huiles lubrifiantes dans des proportions qui peuvent aller par exemple de 0,5 à 20 %, et plus particulièrement de 2 à 10 % en masse de matière active (c'est-à-dire huile de dilution exclue).

Outre les propriétés antiusure et extrême-pression qu'ils confèrent aux huiles lubrifiantes, minérales ou synthétiques, auxquelles ils sont incorporés, les produits colloïdaux surbasiques selon l'invention présentent l'avantage important de leur conférer également des propriétés anti-oxydantes, du fait de la présence dans leur molécule de groupements dihydrocarbyl-dithiophosphoriques.

Les acides dihydrocarbyl-dithiophosphoryl-alcane-sulfoniques utilisés comme tensioactifs pour préparer les produits colloïdaux de l'invention peuvent être préparés selon les méthodes décrites ci-après.

Si l'on dispose de l'acide dihydrocarbyl-dithiophosphorique correspondant, on peut le faire réagir directement sur la sultone de formule générale : 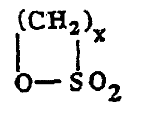 dans laquelle le nombre x prend une valeur de 3 à 6, de préférence de 3 ou de 4, suivant l'acide dihydrocarbyl-dithiophosphoryl-alcane-sulfonique que l'on souhaite synthétiser. Ainsi, pour préparer un acide dihydrocarbyl-dithiophosphoryl-3-propanesulfonique, on utilisera la propane-sultone; et pour préparer un acide dihydrocarbyldithiophosphoryl-4-butane-sulfonique, on utilisera la butane-sultone.

L'acide dihydrocarbyl-dithiophosphorique de départ peut avoir été préparé par un procédé connu en soi, par réaction d'un alcool ou d'un phénol de formule ROH, où R est défini comme plus haut, avec du décasulfure de tétraphosphore P₄S₁₀. La synthèse des acides dihydrocarbyl-dithiophosphoriques et de leurs sels a déjà été décrite dans l'art antérieur dans de nombreux documents. On peut citer par exemple les brevets des Etats-Unis US-A-2 364 283, 2 364 284, 2 365 938, 2 410 650, 2 438 876 et 3 190 833. Ainsi, on peut faire réagir le décasulfure de tétraphosphore avec un alcool ou un phénol au sein d'un solvant organique, par exemple chloré. On chauffe au reflux du solvant jusqu'à élimination complète du sulfure d'hydrogène formé.

La réaction de l'acide dihydrocarbyl-dithiophosphorique avec la sultone peut être effectuée au sein d'au moins un solvant organique polaire tel que l'acétonitrile, éventuellement en mélange avec une proportion mineure de méthanol, par chauffage, par exemple au reflux du solvant. On refroidit, puis on élimine le(s) solvant(s) de manière à obtenir l'acide dihydrocarbyl-dithiophosphoryl-alcane-sulfonique recherché.

On peut encore synthétiser les acides dihydrocarbyl-dithiophosphoryl-alcane-sulfoniques utilisés dans l'invention à partir des acides dihydrocarbyl-dithiophosphoriques correspondants de la manière suivante.

L'acide dihydrocarbyl-dithiophosphorique est neutralisé par un hydroxyde de métal alcalin, par exemple la potasse, en milieu alcoolique, et l'alcool est éliminé. On isole ainsi un sel, en général de potassium, de l'acide dihydrocarbyl-dithiophosphorique. Le sel de l'acide dihydrocarbyl-dithiophosphorique isolé est remis en solution dans un solvant organique polaire ou un mélange de solvants organiques polaires. A cet égard, on peut utiliser l'acétonitrile, éventuellement en mélange avec une proportion mineure de méthanol. Il est alors mis à réagir avec la sultone appropriée. Après réaction, par exemple au reflux du solvant, on peut séparer, après refroidissement et élimination du solvant, par exemple par évaporation sous pression réduite, le sel de potassium de l'acide dihydrocarbyl-dithiophosphoryl-alcane-sulfonique. Le sel obtenu, après purification, est transformé en l'acide sulfonique correspondant, par réaction avec un acide fort, tel que l'acide chlorhydrique ou l'acide sulfurique, au sein d'un solvant organique par exemple chloré. Après élimination du solvant, par exemple par évaporation, on obtient l'acide dihydrocarbyl-dithiophosphoryl-alcane-sulfonique recherché.

Les sels de métal alcalin ou alcalino-terreux des acides dihydrocarbyl-dithiophosphoryl-alcane-sulfoniques peuvent être préparés à partir des acides dihydrocarbyl-dithiophosphoryl-alcane-sulfoniques eux-mêmes, comme décrit ci-après.

L'acide dihydrocarbyl-dithiophosphoryl-alcane-sulfonique est mis à réagir avec l'hydroxyde métallique approprié, en général au sein d'un solvant hydrocarboné, tel par exemple que le toluène, auquel peut être ajouté, en une proportion mineure, un solvant organique polaire, tel par exemple que le méthanol. Le sel obtenu est alors isolé par séparation de l'hydroxyde en excès (dans le cas d'une suspension d'hydroxyde) et élimination du solvant, par exemple par évaporation. On isole sous forme solide le sel recherché, en général avec un bon rendement.

Par ailleurs, comme déjà mentionné plus haut, les sels de métaux alcalins des acides dihydrocarbyl-dithiophosphoryl-alcane-sulfoniques, en particulier ceux du potassium, peuvent être obtenus intermédiairement dans la préparation des acides eux-mêmes.

Les exemples suivants illustrent l'invention sans la limiter. On décrit tout d'abord, dans l'Exemple 1, la préparation de l'acide dihydrocarbyl-dithiophosphoryl-alcane-sulfonique qui sera utilisé dans l'Exemple 2. L'Exemple 3 est donné à titre de comparaison. Dans l'Exemple 4, on évalue les performances des produits des Exemples 2 et 3.

### Exemple 1. Synthèse de l'acide (O,O'-didodécyl-dithiophosphoryl)-4-butanesulfonique de formule : (C₁₂H₂₅-O)₂-P(S)-S-CH₂-CH₂-CH₂-CH₂-SO₃H.

Dans un réacteur contenant une solution de 16,8 g (0,09 mole) de n-dodécanol dans 60 ml de chloroforme, on introduit en 10 minutes à 40 °C, 5,0 g (0.0113 mole) de décasulfure de tétraphosphore. On porte le milieu à reflux pendant 10 heures, puis on procède, après filtration, à l'évaporation du chloroforme. On procède à la neutralisation de l'acide formé par une quantité appropriée de potasse alcoolique, puis le solvant est évaporé. Le milieu est alors dissous dans 60 ml d'un mélange acétonitrile-méthanol (90/10). On introduit alors goutte à goutte à 40 °C une solution de 1,5g (0,011 mole) de butane-sultone dans 20ml d'acétonitrile. On porte le mélange à la température de reflux pendant 2 heures, puis le mélange est refroidi et concentré sous pression réduite. Le sel obtenu est purifié par précipitation dans le cyclohexane, filtré puis séché. Le sulfonate de potassium est alors dissous dans 80 ml de chloroforme, puis acidifié. Après évaporation du chloroforme, on recueille 16,5 g d'un produit clair dont les caractéristiques sont les suivantes :

| | |
|---|---|
| Teneur en phosphore | 5,0 % en masse (théorie : 5,15 %) |
| Teneur en soufre | 7,9 % en masse (théorie : 8,0 %) |
| Acidité | 1,6 milliéquivalent acide/g (théorie : 1,66 méq/g) |
| RMN du phosphore 31 | signal unique à 95,6 ppm. |

### Exemple 2.

Dans un réacteur équipé d'un agitateur, d'un système d'introduction de gaz et d'un condenseur, on introduit 15,0 g (0,025 mole) d'acide (O,O'-didodécyl-dithiophosphoryl)-3-butane-sulfonique préparé comme décrit dans l'Exemple 1, 15,0 g d'huile minérale 130 Neutral, 15,5 g (0,21 mole) de chaux Ca(OH)₂, 60 ml de toluène et 15 ml de méthanol. On introduit ensuite sous agitation et à la température ambiante 6,6 g (0,15 mole) de dioxyde de carbone en 30 minutes environ.

Pendant toute la durée de l'introduction, la température est maintenue inférieure à 35 °C. Après filtration du milieu, on procède à l'élimination de la phase alcoolique par décantation, puis on obtient après évaporation du solvant 38,0 g d'un produit liquide clair et limpide, dont les caractéristiques sont les suivantes :

| | |
|---|---|
| Teneur en calcium | 15,2 % en masse |
| Teneur en phosphore | 1,6 % en masse |
| Teneur en soufre | 5,3 % en masse |
| Réserve alcaline (BN) | 385 mg de KOH/g. |

La dialyse du produit dans du n-heptane à travers une membrane en latex permet de déterminer la quantité de matière colloïdale (tensioactif plus "coeur" de carbonate de calcium), ainsi que la quantité d'huile de dilution :

| | |
|---|---|
| Fraction colloïdale | 68 % en masse |
| Huile | 32 % en masse. |

### Exemple 3 (comparatif).

Dans un réacteur équipé d'un agitateur, d'un système d'introduction de gaz et d'un condenseur, on introduit 15,0 g d'un acide alkyl-aryl-sulfonique classique exempt de toute fonction phosphosoufrée et de masse molaire moyenne équivalente à 700, 15,0 g d'huile minérale 130 Neutral, 15,5 g (0,21 mole) de chaux Ca(OH)₂, 80 ml de' toluène et 35 ml de méthanol. On introduit ensuite sous agitation et à la température ambiante 8,0 g (0,18 mole) de dioxyde de carbone en 30 minutes environ. Pendant toute la durée de l'introduction, la température est maintenue inférieure à 35 °C. Après filtration du milieu, on procède à l'élimination de la phase alcoolique par décantation, puis on obtient après évaporation du solvant 39,5 g d'un produit liquide et limpide, dont les caractéristiques sont les suivantes :

| | |
|---|---|
| Teneur en calcium | 14,0 % en masse |
| Teneur en phosphore | 0,0 % en masse |
| Teneur en soufre | 1,3 % en masse |
| Réserve alcaline (BN) | 405 mg de KOH/g. |

La dialyse du produit dans du n-heptane à travers une membrane en latex permet de déterminer la quantité de matière colloïdale (tensioactif plus "coeur" de carbonate de calcium), ainsi que la quantité d'huile de dilution :

| | |
|---|---|
| Fraction colloïdale | 58 % en masse |
| Huile | 42 % en masse. |

### Exemple 4. Evaluation des performances antiusure et extrême-pression.

Le produit de l'invention préparé comme décrit dans l'Exemple 2 ci-dessus est caractérisé pour ses propriétés antiusure et extrême-pression dans une huile minérale 130 Neutral Solvent à une concentration permettant d'ajuster la teneur en matière active (fraction colloïdale) dans l'huile à 7,5 % en masse. La caractérisation est effectuée au moyen d'une machine 4 billes selon l'essai ASTM D-2783. Les résultats sont rassemblés dans le tableau 1 ci-après. Y figurent également, à titre comparatif, les résultats obtenus avec le produit colloïdal classique du carbonate de calcium, obtenu comme décrit dans l'Exemple 3 à partir d'un tensioactif acide alkyl-aryl-sulfonique classique exempt de fonctions dialkyldithiophosphoriques. L'examen des résultats confirme les meilleures performances antiusure et extrême-pression du produit de l'invention dont la chaîne tensioactive est porteuse de groupements phosphosoufrés.

**Tableau 1**

| Produit de l'Exemple | Concentration de matière active/huile (% en masse) | Charge de soudure (daN) | Diamètre d'empreinte après 1 heure sous 40 daN (mm) | Diamètre d'empreinte après 1 heure sous 80 daN (mm) |
|---|---|---|---|---|
| 2 | 7,5 | 240 | 0,34 | 0,44 |
| 3 | 7,5 | 180 | 0,41 | 1,95 |

## Revendications

1. Produit colloïdal surbasique **caractérisé en ce qu'**il comprend, maintenu sous forme micellisée au sein d'un milieu hydrocarboné huileux, un coeur de carbonate de métal alcalin ou alcalino-terreux entouré d'une couronne d'au moins un composé tensioactif choisi parmi les acides dihydrocarbyl-dithiophosphoryl-alcane-sulfoniques répondant à la formule générale : 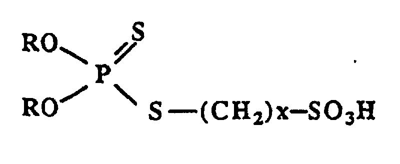 dans laquelle R représente un radical hydrocarboné monovalent de 1 à 30 atomes de carbone, aliphatique, cycloaliphatique ou aromatique et x a une valeur de 3 à 6, et leurs sels de métaux alcalins ou alcalino-terreux.

2. Produit colloïdal selon la revendication 1 **caractérisé en ce qu'**il dérive de la carbonatation d'au moins un oxyde ou hydroxyde de métal alcalin ou alcalino-terreux effectuée dans un milieu hydrocarboné huileux, en présence du dit acide ou du dit sel d'acide dihydrocarbyl-dithiophosphoryl-alcane-sulfonique.

3. Produit colloïdal selon l'une des revendications 1 et 2 **caractérisé en ce qu'**il est préparé par mise en oeuvre des étapes suivantes :
a) on introduit dans un milieu hydrocarboné huileux au moins un acide et/ou au moins un sel d'acide dihydrocarbyl-dithiophosphoryl-alcane-sulfonique et au moins un oxyde ou un hydroxyde de métal alcalin ou alcalino-terreux en présence d'au moins un solvant hydrocarboné aliphatique, cycloaliphatique ou aromatique et, à titre de promoteur, d'au moins un liquide organique oxygéné ;
b) on effectue la carbonatation en introduisant dans le milieu, maintenu sous agitation, de l'anhydride carbonique CO₂ ;
c) après la fin de la réaction, on filtre le milieu pour en éliminer les éventuelles particules d'oxyde ou d'hydroxyde de métal alcalin ou alcalino-terreux qui n'auraient pas réagi lors de la carbonatation et on sépare par décantation le dit liquide organique oxygéné ;
et d) on évapore le dit solvant hydrocarboné aliphatique, cycloaliphatique ou aromatique, de manière à obtenir le produit colloïdal recherché sous la forme d'une suspension limpide dans le dit milieu hydrocarboné huileux de départ.

4. Produit colloïdal selon l'une des revendications 1 3 **caractérisé en ce que**, dans sa préparation, dans l'étape (a), le dit milieu hydrocarboné huileux consiste en une huile minérale ou synthétique, l'acide ou le sel d'acide dihydrocarbyl-dithiophosphoryl-alcane-sulfonique est mis en jeu à une concentration allant de 5 à 100 % en masse par rapport au dit milieu hydrocarboné huileux, l'oxyde ou l'hydroxyde de métal alcalin ou alcalino-terreux est mis en jeu en une proportion de 20 à 200 % en masse par rapport au dit acide ou sel d'acide dihydrocarbyl-dithiophosphoryl-alcane-sulfonique, le solvant hydrocarboné aliphatique, cycloaliphatique ou aromatique est mis en jeu en une proportion permettant d'opérer à un concentration en réactifs de 2 à 70 % en masse, et le liquide organique oxygéné utilisé comme promoteur est mis en jeu à raison de 5 à 40 % en volume par rapport au dit solvant hydrocarboné ; et dans l'étape (b), on effectue la carbonatation à une température allant'de l'ambiante jusqu'à une valeur d'environ 45 °C.

5. Produit colloïdal selon l'une des revendications 1 à 4 **caractérisé en ce que**, dans la formule de l'acide ou du sel d'acide dihydrocarbyl-dithiophosphoryl-alcane-sulfonique, x une valeur de 3 ou de 4.

6. Produit colloïdal selon l'une des revendications 1 à 5 **caractérisé en ce que**, dans l'étape (a), on utilise un oxyde ou un hydroxyde de sodium, de potassium, de magnésium, de calcium ou de baryum.

7. Produit colloïdal selon l'une des revendications 1 à 6 **caractérisé en ce qu'**il se présente sous la forme d'une suspension colloïdale stable en milieu hydrocarboné, il renferme une proportion de métal alcalin ou alcalino-terreux de 3 à 30 % en masse, il présente un taux de basicité représenté par un indice de base de 50 à 550 mg de potasse par gramme de produit, huile de dilution exclue, une teneur en soufre de 2 à 10 % en masse et une teneur en phosphore de 0,3 à 7 % en masse.

8. Composition lubrifiante aux propriétés antiusure et extrême pression améliorées, **caractérisée en ce qu'**elle comprend une proportion majeure d'huile lubrifiante, minérale ou synthétique, et une proportion mineure d'au moins un additif consistant en un produit colloïdal selon l'une des revendications 1 à 7.

9. Composition lubrifiante selon la revendication 8 **caractérisée en ce que** le dit produit colloïdal est présent en une proportion de 0,5 à 20 % en masse.

## Claims

1. Overbased colloidal product, **characterized in that** it comprises, kept under micellized form within an oily medium that contains hydrocarbon, a core of alkaline or alkaline-earth metal carbonate, surrounded by a ring of at least one surfactant compound that is selected from among the dihydrocarbyl-dithiophosphoryl-alkane-sulfonic acids that correspond to general formula: 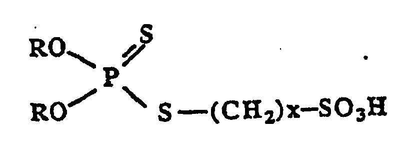 in which R represents a monovalent radical that contains hydrocarbon with 1 to 30 aliphatic, cycloaliphatic or aromatic carbon atoms and x has a value of 3 to 6, and their alkaline or alkaline-earth metal salts.

2. Colloidal product according to claim 1, wherein it is derived from the carbonation of at least one oxide or hydroxide of an alkaline or alkaline-earth metal that is carried out in an oily medium that contains hydrocarbon in the presence of said dihydrocarbyl-dithiophosphoryl-alkane-sulfonic acid or of said dihydrocarbyl-dithiophosphoryl-alkane-sulfonic acid salt.

3. Colloidal product according to one of claims 1 and 2, wherein it is prepared by use of the following stages:
a) at least one dihydrocarbyl-dithiophosphoryl-alkane-sulfonic acid and/or at least one dlhydrocarbyl-dithiophosphoryl-alkane-sulfonic acid salt and at least one oxide or a hydroxide of an alkaline or alkaline-earth metal are introduced into an oily medium that contains hydrocarbon in the presence of at least one aliphatic, cycloaliphatic or aromatic solvent that contains hydrocarbon and, as a promoter, at least one oxidized organic liquid;
b) the carbonation is carried out by introducing carbonic anhydride CO₂ into the medium while being stirred continuously;
c) after the end of the reaction, the medium is filtered to remove from it possible particles of oxide or hydroxide of an alkaline or alkaline-earth metal which would not have reacted during carbonation, and said oxidized organic liquid is separated by decantation;
and d) said aliphatic, cycloaliphatic or aromatic solvent that contains hydrocarbon is evaporated to obtain the desired colloidal product in the form of a clear suspension in said initial oily medium that contains hydrocarbon.

4. Colloidal product according to one of claims 1 to 3, wherein in its preparation, in stage (a), said oily medium that contains hydrocarbon consists of a mineral or synthetic oil; dihydrocarbyl-dithiophosphoryl-alkane-sulfonic acid or acid salt is used at a concentration ranging from 5 to 100% by mass relative to said oily medium that contains hydrocarbon; the oxide or hydroxide of an alkaline or alkaline-earth metal is used at a ratio of 20 to 200% by mass relative to said dihydrocarbyl-dithiophosphoryl-alkane-sulfonic acid or acid salt; the aliphatic, cycloaliphatic or aromatic solvent that contains hydrocarbon is used at a ratio that makes it possible to operate at a concentration of reagents of 2 to 70% by mass; and the oxidized organic liquid that is used as a promoter is used at a ratio of 5 to 40% by volume relative to said solvent that contains hydrocarbon; and in stage (b), carbonation is carried out at a temperature ranging from ambient temperature up to a value of about 45°C.

5. Colloidal product according to one of claims 1 to 4, wherein in the formula of the dihydrocarbyldithiophosphoryl-alkane-sulfonic acid or acid salt, x has a value of 3 or 4.

6. Colloidal product according to one of claims 1 to 5, wherein in stage (a), an oxide or a hydroxide of sodium, potassium, magnesium, calcium or barium is used.

7. Colloidal product according to one of claims 1 to 6, wherein it comes in the form of a colloidal suspension that is stable in a medium that contains hydrocarbon; it contains a proportion of alkaline or alkaline-earth metal of 3 to 30% by mass; it exhibits a basicity rate that is shown by a base number of 50 to 550 mg of potash per gram of product, excluding diluting oil, a sulfur content of 2 to 10% by mass and a phosphorus content of 0.3 to 7% by mass.

8. Lubricating composition with improved anti-wear and extreme-pressure properties, wherein it comprises a large proportion of lubricating, mineral or synthetic oil, and a small proportion of at least one additive that consists of a colloidal product according to one of claims 1 to 7.

9. Lubricating composition according to claim 8, wherein said colloidal product is present at a ratio of 0.5 to 20% by mass.

## Patentansprüche

1. Kolloidales überbasisches Produkt, **dadurch gekennzeichnet, dass** es, in mizellisierter Form in einem öligen Kohlenwasserstoffmilieu gehalten, einen Alkali- oder Erdalkalimetallcarbonatkern umringt von einem Kranz wenigstens einer tensioaktiven Verbindung, die unter den Dihydrocarbyl-Dithiophosphoryl-Alkansulfonsäuren gewählt ist, welche der allgemeinen Formel entsprechen: 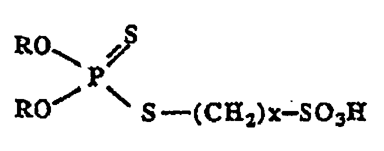 in der R ein monovalentes aliphatisches, cycloaliphatisches, oder aromatisches Kohlenwasserstoffradikal mit 1 bis 30 Kohlenstoffatomen und x einen Wert von 3 bis 6 hat, und deren Alkali- oder Erdalkalimetallsalzen.

2. Kolloidales Produkt nach Anspruch 1, **dadurch gekennzeichnet, dass** es aus der Karbonisierung wenigstens eines Alkali- oder Erdalkalimetalloxids oder -hydroxids kommt, die in einem öligen Kohlenwasserstoffmilieu in Gegenwart der Säure oder des Salzes von Dihydrocarbyl-Dithiophosphoryl-Alkansulfonsäure durchgeführt wird.

3. Kolloidales Produkt nach einem der Ansprüche 1 und 2, **dadurch gekennzeichnet, dass** es durch Ausführen der folgenden Stufen hergestellt wird:
a. man führt in ein öliges Kohlenwasserstoffmilieu wenigstens eine Säure und/oder wenigstens ein Salz von Dihydrocarbyl-Dithiophosphoryl-Alkansulfonsäure und wenigstens ein Alkali- oder Erdalkalimetalloxid oder -hydroxid in Gegenwart wenigstens eines aliphatischen, cycloaliphatischen, oder aromatischen Kohlenwasserstofflösungsmittels ein und als Promotor wenigstens eine sauerstoffhaltige organische Flüssigkeit;
b. man führt die Karbonisierung durch, indem in das unter Rühren oder Schütteln gehaltene Milieu Kohlensäureanhydrid CO₂ eingeführt wird;
c. nach dem Reaktionsende filtriert man das Milieu, um die eventuellen Partikel von Alkali- oder Erdalkalimetalloxid oder -hydroxid, die bei der Karbonisierung nicht reagiert hätten, zu entfernen, und man trennt die sauerstoffhaltige organische Flüssigkeit durch Dekantieren; und
d. man verdampft das aliphatische, cycloaliphatische, oder aromatische Kohlenwasserstofflösungsmittel derart, dass das gewünschte kolloidale Produkt in Form einer klaren Suspension in dem öligen Kohlenwasserstoffausgangsmilieu erhalten wird.

4. Kolloidales Produkt nach einem der Ansprüche 1 bis 3, **dadurch gekennzeichnet, dass** bei der Herstellung in der Stufe (a) das ölige Kohlenwasserstoffmilieu aus mineralischem oder synthetischem Öl besteht, die Säure oder das Salz von Dihydrocarbyl-Dithiophosphoryl-Alkansulfonsäure in einer Konzentration von 5 bis 100 Masse-% bezüglich des öligen Kohlenwasserstoffmilieus eingesetzt wird, das Alkali- oder Erdalkalimetalloxid oder -hydroxid in einem Anteil von 20 bis 200 Masse-% bezüglich der Säure oder des Salzes von Dihydrocarbyl-Dithiophosphoryl-Alkansulfonsäure eingesetzt wird, das aliphatische, cycloaliphatische, oder aromatische Kohlenwasserstofflösungsmittel in einem Anteil eingesetzt wird, der es ermöglicht, bei einer Reagenzkonzentration von 2 bis 70 Masse-% zu arbeiten, und die als Promotor verwendete sauerstoffhaltige organische Flüssigkeit in einem Verhältnis von 5 bis 40 Vol.-% bezüglich des Kohlenwasserstofflösungsmittels eingesetzt wird; und man in Stufe (b) die Karbonisierung bei einer Temperatur durchführt, die von Umgebungstemperatur bis auf einen Wert von 45°C geht.

5. Kolloidales Produkt nach einem der Ansprüche 1 bis 4, **dadurch gekennzeichnet, dass** bei der Formel der Säure oder des Salzes von Dihydrocarbyl-Dithiophosphoryl-Alkansulfonsäure x einen Wert von 3 oder 4 hat.

6. Kolloidales Produkt nach einem der Ansprüche 1 bis 5, **dadurch gekennzeichnet, dass** in Stufe (a) Natrium-, Kalium-, Magnesium-, Calcium- oder Bariumoxid oder -hydroxid verwendet wird.

7. Kolloidales Produkt nach einem der Ansprüche 1 bis 6, **dadurch gekennzeichnet, dass** es in Form einer im Kohlenwasserstoffmilieu stabilen, kolloidalen Suspension vorliegt, einen Alkali- oder Erdalkalimetallanteil vom 3 bis 30 Masse-% einschließt, einen Basizitätsgrad, der durch einen Baseindex von 50 bis 550 mg Kalium pro Gramm Produkt, ausschließlich Verdünnungsöl, angezeigt ist, einen Schwefelgehalt von 2 bis 10 Masse-% und einen Phosphorgehalt von 0,3 bis 7 Masse-% aufweist.

8. Schmiermittelzusammensetzung mit verbesserten Antiverschleiß- und Extremdruckeigenschaften, **dadurch gekennzeichnet, dass** sie einen überwiegenden Anteil mineralischen oder synthetischen Schmieröls und einen minderen Anteil wenigstens eines Zusatzes umfasst, der in einem kollodidalen Produkt nach einem der Ansprüche 1 bis 7 besteht.

9. Schmiermittelzusammensetzung nach Anspruch 8, **dadurch gekennzeichnet, dass** das kolloidale Produkt in einem Anteil von 0,5 bis 20 Masse-% vorliegt.
